# EUROPEAN PATENT APPLICATION

(11) **EP 2 075 747 A1**
(43) Date of publication of application: **01.07.2009**
(21) Application number: 08169302.0
(22) Date of filing: 17.11.2008
(51) Int. Cl.: G06Q 10/00

(54) **System for confirming the delivery of commodities**

(30) Priority: 16.11.2007 NL 1034709
(71) Applicant: Regiobloemist, 4175 ED Haaften (NL); Intersite Webdesign, 3034 GD Rotterdam (NL)
(72) Inventor: van Zandvoort, Pascal Petrus Arnoldus, 4175 ED, Haaften (NL); Gooren, Sebastiaan Antonius Wilhelmus, 3034 GD, Rotterdam (NL)
(74) Representative: Hatzmann, Martin

(57) **Abstract**

A system for the delivery of commodities. The system has a central server, a customer interface connectable with the central server via a first communication connection, and a mobile platform connectable with the central server via at least one of a second and third communication connection. Here, the mobile platform is arranged to record the delivery of the commodities upon delivery thereof to a recipient and to report this back to the central server via the at least one of the second and third communication connection. A confirmation of receipt is reported back by the mobile platform to the central server via the at least one of the second and third communication connection. Further, the system may be provided with at least one sales server, which is arranged to communicate with the central server.

## Description

The invention relates to a system for confirming the delivery of commodities. More in particular, the invention relates to a system for confirming the delivery of remotely ordered flowers or gifts, the recipient of which is outside the reach of the customer or client.

Remote ordering of commodities for delivery to others than the customer is often problematic. The suppliers specialized in the delivery of commodities often use computerized or non-computerized traditional accounting systems. In such accounting systems, it is difficult, if not impossible, to distinguish, in addition to the customer or client, an additional party in the form of a recipient or delivery address. Especially in computerized order systems, rarely a means is provided to report the delivery to a recipient party or delivery address back to the customer or client in an effective manner. Courier services often have only passively working means for tracking and tracing of the consignments they handle. These systems are normally intended only to give account to the customer, or client, when he asks for it. A customer can only verify with the intended recipient whether the order has been carried out properly and, when this is not the case, only hope that the courier service can still rectify the matter. For remote delivery of flowers to a recipient who is not the customer, Europe has known for many years now the international FLEUROP program for remote ordering and delivery of flowers, intended as gifts. Typically, the giver does not inquire with the recipient after the receipt of the gift, although most givers have the need to know whether their gift has been received in order.

The invention seeks to make improvements in the limited possibilities for the confirmation of the delivery of commodities, as offered by the current trade. Accordingly, it is an object of the present invention to eliminate or improve at least one of the drawbacks of the prior art. More in particular, it is an object of the invention to send a confirmation of the delivery of commodities, such as for instance flowers, to the customer after the commodities, such as flowers, have been delivered to a recipient. The confirmation of delivery may then be provided with a photo or video recording of the recipient with the received commodities, such as flowers. It is also an object of the present invention to provide alternative systems which are simpler to maintain and use and which moreover can be used comparatively advantageously. Alternatively, it is an object of the invention to provide the public with an at the least useful choice.

To this end, the invention provides a system for the delivery of commodities, which system is provided with a central server, a customer interface connectable with the central server via a first communication connection and a mobile platform connectable with the central server via at least one of a second and third communication connection, wherein the mobile platform is arranged to record the delivery of the commodities upon delivery thereof to a recipient and to report this back to the central server via the at least one of the second and third communication connection. Such a system makes it possible to report an active confirmation of delivery back to both the ordering party (customer) and the executive party (web service, or seller). In a particularly advantageous variant of the system according to the invention, the system is further provided with at least one sales server, which is arranged to communicate with the central server. Other advantageous embodiments will be defined in the appended claims and

### description of the drawing.

The invention will now be explained in more detail with reference to the appended drawings, in which:
Fig. 1 schematically shows a system according to the invention; and
Fig. 2 shows a flow chart of a method carried out with the system according to the invention.

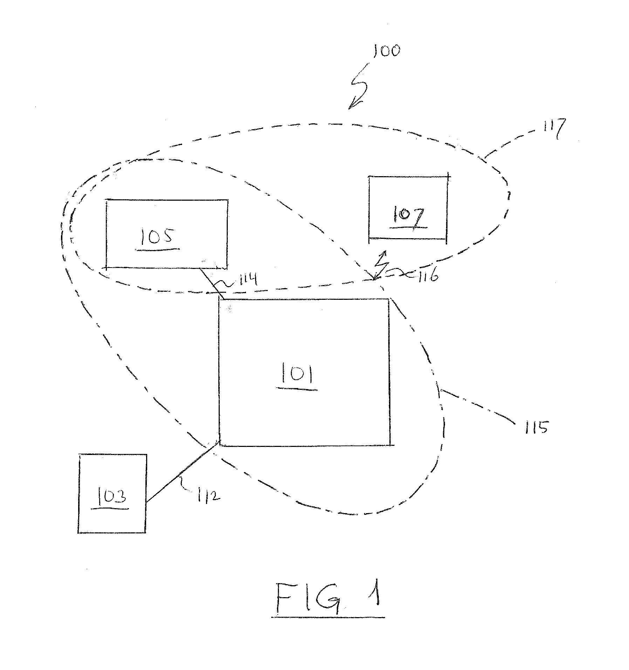

A system 100 for the delivery of commodities according to the invention is schematically represented in Fig. 1. With a central server 101, the offering of a web service is provided for. By means of a customer interface 103, an order of commodities can be made known to the web service. The customer interface 103 may be operated by the customer himself, but optionally also by an operating person. The communication means eligible for placing an order comprise: Internet, telephone, fax, or optionally a customer desk. A first communication connection 112 between the customer interface 103 and the central server 101 is preferably an Internet or computer network connection. The central server 101 is in connection with a server of at least one selling party 105. In practice, there may also be connections with a plurality of geographically distributed sellers, each with their own sales server 105. A second communication connection 114, between the central server 101 and the sales server 105, provides for the exchange of data between the web service and the selling party. Preferably, the second communication connection 114 is also an Internet or computer network connection. In a simplified design of the system according to the invention, the web service is part of the at least one selling party, and the central server 101 and the sales server 105 are carried out as a common network 115, and the customer interface 103 may also be in connection with the central server 101 via the selling party. The system 100 further has a mobile platform 107 associated with a deliverer or delivery service, on which platform a software application can run. This software application may, for instance, be designed in the programming language JAVA or J2ME, as Java Midlets (Java 2 Micro Edition, Java for mobile platforms). By means of the mobile platform 107, the deliverer can maintain a, preferably wireless, third communication connection 115 with the central server 101. The third communication connection 116 may be either an online or an offline connection. An offline variant of the third communication connection 116 may be useful when the mobile platform 107 is provided with an internal memory storage. The information stored in the memory may then, for instance, be reported to the central server 101 of the web service after the deliverer has returned at the location of the selling party. With offline data transfer, the third communication connection 116 may advantageously be designed as a USB connector or as a wireless Bluetooth connection. In practice, it is also conceivable that the selling party and the deliverer belong to the same unit and that the sales server 105 and the mobile platform 107 together optionally form a network unit 117. In such an arrangement, it may be convenient if the second communication connection 114 also has a wireless design.

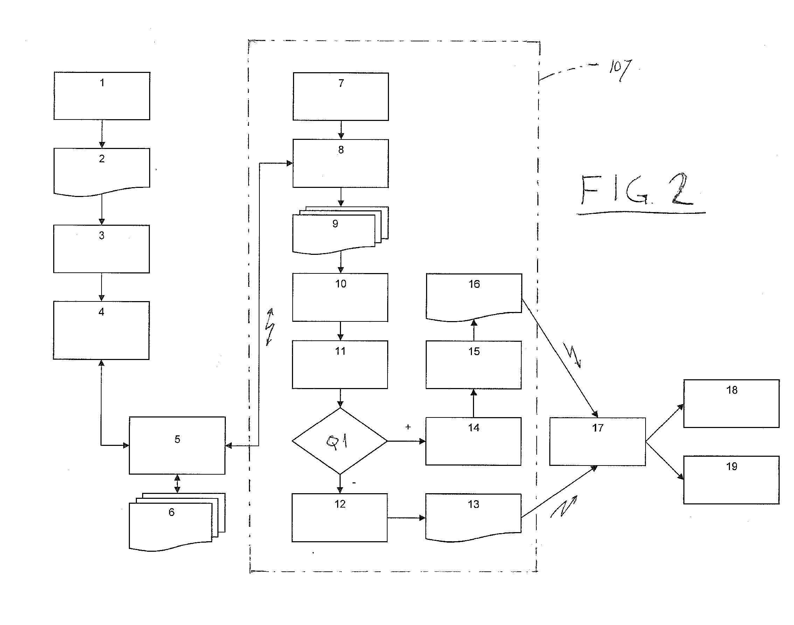

In the flow chart according to Fig. 2, in step 1, via Internet, telephone, fax or optionally in person, a customer places an order for commodities, such as a flower order, for delivery to a recipient to be stated by the customer. The recipient may optionally be the customer himself, but it is usually another person, or another party. In step 2, the details of the order are recorded as an order. In step 3, a selling party receives the details of the order. In step 4, this selling party reports the received order to a web service by reporting the order details of the order to the web service. In step 5, in the web service, the orders are waiting which are ready to be delivered. Reference numeral 6 are the orders which could not be delivered at an earlier time and are still on hold to be presented again. Step 7 starts an application on a mobile platform. The application, which is started in step 7, runs on a mobile telephone, a PDA or another device with Internet access. As a suitable wireless communication connection for the mobile platform, the following qualify: GSM, GPRS, UMTS, HSDPA, EDGE and/or WLAN. Step 8 synchronizes the application with the web service. The mobile platform inquires with the web service what orders there are. The orders which still need to be delivered, are then retrieved and/or sent to the application. In step 9, the application puts together the orders which need to be delivered and, in step 10, the application receives the order details of the orders which need to be delivered. In step 11, a deliverer or delivery service deals with the order by going to the delivery location where an order is to be delivered and seeks to deliver the order. The mobile platform reports the delivery status of an order to the web service, optionally with photographs or videos. To this end, in step Q1, an inquiry takes place whether the order is deliverable. If the order is not deliverable, in step 12, the deliverer or delivery service then reports to the application that the order could not be delivered. The application records the order as non-delivered by giving it back to the web service with a non-delivered status in step 13. The order, which was to be delivered just now, is then reported to the web service with the status non-delivered and the process continues with step 17. If the deliverer or delivery service delivers the order to the recipient, this is reported to the application in step 14. Then the application reports the order as delivered in step 15. The application then changes the status of the order into a delivered status and optionally provides it with photo or video recordings of the delivery in step 16. After this, the process likewise continues with step 17. In step 17, the web service receives the details about the delivery status of the order which needed to be delivered to then be able to report these to the server of the seller, and/or optionally to the seller and customer via an electronic message. In step 18, the web service sends the details about the current status of the order to the customer, optionally as an electronic message, and reports the status of his order. This message may optionally be provided with delivery date and time and may optionally also be provided with photo or video recordings of the receipt. In step 19, the web service sends a message to the seller. The web service then optionally reports the status of the order to the selling party, optionally with delivery date and time, and optionally with photographs and videos. In the flow chart of Fig. 2, with chain-dotted lines, the steps are boxed which are at least controlled by the application running on the mobile platform 107.

In practice, the invention works as follows. The client orders flowers via Internet, telephone or fax or through personal contact. The flowers are delivered by a deliverer at the recipient address. Via a mobile telephone, PDA or device with Internet access, the deliverer confirms to a web application that the flower order has been delivered at the recipient address. The deliverer has the possibility to add a photo or video message of the recipient with the flower order to the confirmation via a mobile telephone, PDA or device with Internet access.

The web application receives the confirmation. The web application informs the client that the order has been delivered. This is done to the client or via the selling party and the photograph(s) or video(s), if present, are added to the confirmation which the client receives. The confirmation is sent to the client via an e-mail or mobile message. The client directly receives all details of the confirmation or is referred, via a reference in the message, to a web application where the photograph(s) and or video(s) and all other information about his order can be viewed and examined.

In the exemplary embodiment described, the following parties are assumed:
1. customer (or, client),
2. seller, or selling party,
3. deliverer, and
4. recipient (of the flowers or commodities).

If the seller is also the deliverer, then there are the following parties:
1. customer (or, client)
2. seller, or selling party, and
3. recipient (of the flowers or commodities).

In some cases, the web service is an additional party, which provides for a correct handling of the communication flows, such as:
1. what commodities need to be delivered,
2. date and time at which the commodities need to be delivered,
3. place where the commodities need to be delivered,
4. what the status is of the commodities to be delivered, and
5. communication back to the parties which need or wish to be informed about this (customer, seller, optionally recipient).

Under certain circumstances, the web service may also be the selling party, or be part thereof. The web service is not only a party which mediates between seller and customer. In fact, also a coordinating sales organization may be involved, with the web service acting as a link between a coordinating organization and the deliverer, while the customer, selling party and coordinating organization are being kept informed via status reports.

The selling party may be an individual seller, but may also be a coordinating organization comprising multiple sellers.

Also, the customer may be the recipient, if he orders the commodities or flowers for himself. However, typically, the recipient is a different party than the customer, or the client.

It is assumed that the design and the working of the present invention are clear from the above description. The invention is not limited to any embodiment described herein and, within the abilities of a skilled person, modifications are possible which are to be considered to be within the scope of the protection. Expressions such as: "means for..." or "means to..." are to be read as: "component formed for..." or "element constructed to..." and are to be understood to comprise all equivalents of the described design as well. In addition, properties which are not specifically or explicitly described or required may be comprised in the construction according to the present invention without departing from the scope of protection.

## Claims

1. A system for the delivery of commodities, which system is provided with a central server, a customer interface connectable with the central server via a first communication connection, and a mobile platform connectable with the central server via at least one of a second and third communication connection, wherein the mobile platform is arranged to record the delivery of the commodities upon delivery thereof to a recipient and to report this back to the central server via the at least one of the second and third communication connection.

2. A system according to claim 1, further provided with at least one sales server, which is arranged to communicate with the central server.

3. A system according to claim 2, wherein the at least one sales server is arranged to exchange order data with the central server via the second communication connection.

4. A system according to claim 2 or 3, wherein the customer interface is arranged to communicate with the central server via the at least one sales server.

5. A system according to any one of the preceding claims, wherein the mobile platform is associated with a delivery service or a deliverer.

6. A system according to any one of claims 2-5, wherein the at least one sales server and the central server form a common network.

7. A system according to any one of claims 2-5, wherein the at least one sales server is also the central server.

8. A system according to any one of claims 2-5, wherein the at least one sales server and the mobile platform form a common network.

9. A system according to any one of the preceding claims, wherein the central server is a web server.

10. A system according to any one of the preceding claims, wherein the mobile platform is a mobile telephone.

11. A system according to claim 10, wherein the mobile telephone is arranged to store and run a software application, optionally a JAVA applet.

12. A system according to any one of the preceding claims, wherein the commodities to be delivered comprise flowers or plants.

13. A system according to any one of the preceding claims, wherein a confirmation of receipt generated by the mobile platform is provided with a photo and/or video recording of the receipt of the commodities by the recipient.

14. A system according to any one of the preceding claims, wherein the central server, after receipt of a confirmation of receipt from the mobile platform, sends a message to the customer or client.

15. A system according to any one of the preceding claims, wherein the central server, after receipt of a confirmation of receipt from the mobile platform, sends a message to the selling party.
